# EUROPEAN PATENT APPLICATION

(11) **EP 4 703 495 A1**
(43) Date of publication of application: **04.03.2026**
(21) Application number: 24796500.7
(22) Date of filing: 07.02.2024
(51) Int. Cl.: C23C 10/48, C23C 26/00

(54) **AMMONIA HANDLING DEVICE AND METHOD FOR PRODUCING SAME**

(30) Priority: 27.04.2023 JP 2023073374
(71) Applicant: IHI Corporation, Tokyo 135-8710 (JP)
(72) Inventor: MATSUNAGA, Yasuo, Tokyo 135-8710 (JP); MIZUSHINO, Kotaro, Tokyo 135-8710 (JP); MURAMOTO, Tomoya, Tokyo 135-8710 (JP)
(74) Representative: TBK
(86) International application number: PCT/JP2024/004055
(87) International publication number: WO 2024/224741

(57) **Abstract**

An ammonia handling device (1) includes a modified layer (12) containing a β-phase NiAl intermetallic compound, and an ammonia contact part (10) configured so that ammonia contacts the modified layer (12). The ammonia contact part (10) may include a metal base material (11), and the modified layer (12) may cover the metal base material (11).

## Description

### TECHNICAL FIELD

This disclosure relates to an ammonia handling device and a method of manufacturing thereof.

### BACKGROUND ART

Ammonia molecules do not contain carbon, and ammonia does not generate carbon dioxide when burned. Therefore, efforts have been made to use ammonia as a fuel to reduce carbon dioxide emissions into the atmosphere. However, it is known that ammonia reacts with metals to form nitrogen compounds.

Patent Literature 1 discloses a denitration method of exhaust gas in which ammonia is injected from an ammonia injection device into high-temperature exhaust gas containing nitrogen oxides and having a high temperature of 480°C or higher, and catalytic reduction with a denitration catalyst takes place. In the ammonia injection device, a Fe-Al alloy layer containing 25 to 30% aluminum is formed on a steel surface.

### CITATION LIST

### PATENT LITERATURE

Patent Literature 1: Japanese Patent Application Publication No. H06-114236

### SUMMARY OF THE INVENTION

### PROBLEMS TO BE SOLVED BY INVENTION

However, with a Fe-Al alloy layer as disclosed in the conventional technology, nitriding may not be sufficiently reduced in an environment with high ammonia concentration. Nitrogen compounds have hard and brittle properties, so that nitriding of metals, for example, may reduce mechanical properties of metals.

Therefore, an object of the present disclosure is to provide an ammonia handling device and a method of manufacturing thereof capable of reducing nitriding due to ammonia.

### SOLUTION TO PROBLEM

A ammonia handling device according to the present disclosure includes a modified layer containing a β-phase NiAl intermetallic compound, and an ammonia contact part configured so that ammonia contacts the modified layer.

The ammonia contact part may include a metal base material, and the modified layer may cover the metal base material.

The metal base material may be nickel or a nickel alloy.

The ammonia in contact with the modified layer may be at 200°C or higher.

The ammonia handling device may be an ammonia combustion gas turbine, an ammonia combustion boiler, an ammonia combustion furnace, an ammonia fuel cell device, an ammonia fueled engine, an ammonia synthesis device, or a component included therein.

A method of manufacturing an ammonia handling device according to the present disclosure, includes forming the modified layer by diffusing aluminum into nickel or a nickel alloy.

### EFFECTS OF INVENTION

The present disclosure provides an ammonia handling device capable of reducing nitriding by ammonia, and a method of manufacturing thereof.

### BRIEF DESCRIPTION OF DRAWINGS

[FIG. 1] FIG. 1 is a schematic diagram illustrating an ammonia handling device according to an embodiment.
[FIG. 2] FIG. 2 is a schematic diagram illustrating an ammonia combustion gas turbine according to an embodiment.
[FIG. 3] FIG. 3 is a schematic diagram illustrating an ammonia combustion boiler according to an embodiment.
[FIG. 4] FIG. 4 is a schematic diagram illustrating an ammonia fuel cell device according to an embodiment.
[FIG. 5] FIG. 5 is a schematic diagram illustrating an ammonia fueled engine according to an embodiment.
[FIG. 6] FIG. 6 is a schematic diagram illustrating an ammonia synthesis device according to an embodiment.
[FIG. 7] FIG. 7 is a scanning electron microscope (SEM) image showing that a measurement point of energy dispersive X-ray spectroscopy (EDS) is a position A near an outer surface of a modified layer.
[FIG. 8] FIG. 8 is an SEM image showing that the measurement point of EDS is a position B near the metal base material of the modified layer.
[FIG. 9] FIG. 9 is a graph comparing nitrided layer depths of an example and comparative examples.

### DESCRIPTION OF EMBODIMENTS

Hereinafter, several exemplary embodiments will be described with reference to the drawings. The dimensional ratios in the drawings are exaggerated for the sake of explanation, and may differ from the actual ratios.

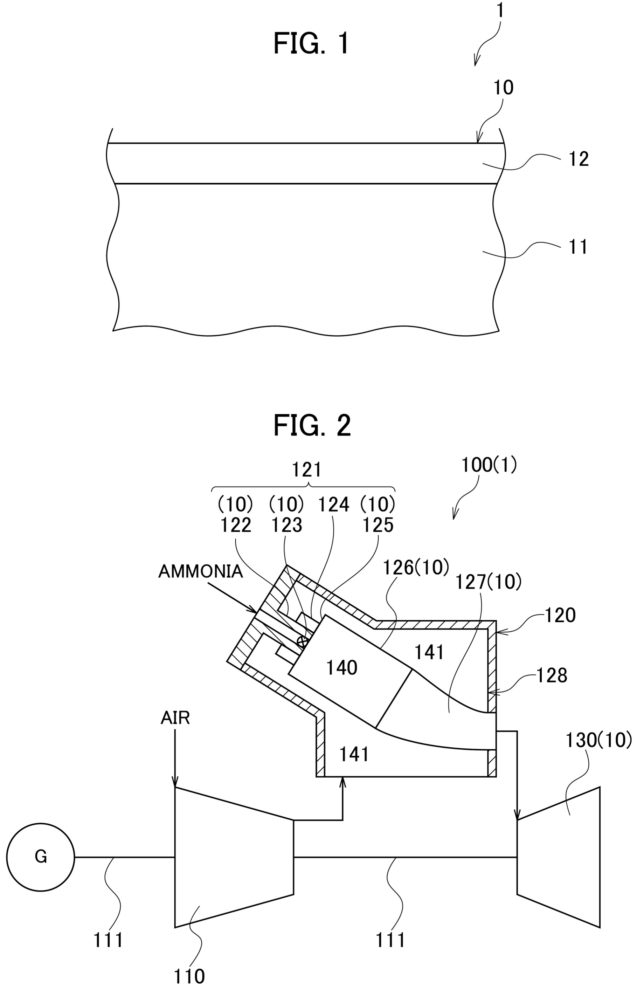

As illustrated in FIG. 1, an ammonia handling device 1 includes an ammonia contact part 10. The ammonia contact part 10 includes a metal base material 11, and a modified layer 12 covering the metal base material 11 and containing a β-phase NiAl intermetallic compound. The ammonia contact part 10 is configured so that ammonia contacts the modified layer 12.

The metal base material 11 is not particularly limited, and may be, for example, nickel, iron, magnesium, aluminum, or an alloy containing these elements. As will be described below, the metal base material 11 is preferably nickel or a nickel alloy when the modified layer 12 is formed by diffusion treatment.

The nickel alloy may be an alloy in which the nickel content in the alloy is the largest by weight. The nickel alloy may contain 50% by weight or more of nickel. The nickel alloy may contain iron and chromium, and optionally at least one element selected from the group consisting of carbon, silicon, manganese, phosphorus, sulfur, nickel, molybdenum, cobalt, copper, tungsten, aluminum, titanium, niobium, tantalum, vanadium, rhenium, zirconium, boron, and nitrogen, and the remainder may be nickel and inevitable impurities. The inevitable impurities are elements other than those described above, and the optional elements mentioned above may also be included. The total amount of inevitable impurities contained in the nickel alloy may be 0.5% by weight or less, or may be 0.10% by weight or less. The content of each element of inevitable impurities contained in the nickel alloy may be 0.05% by weight or less, or may be 0.01% by weight or less.

The content of iron contained in the nickel alloy may be 1% by weight or more, and 25% by weight or less. The content of iron contained in the nickel alloy may be 3% by weight or more, or 5% by weight or more. The content of iron contained in the nickel alloy may be 20% by weight or less, 16% by weight or less, or 12% by weight or less.

The content of chromium contained in the nickel alloy may be 1% by weight or more, and 35% by weight or less. The content of chromium contained in the nickel alloy may be 4 by weight or more, 8% by weight or more, or 12% by weight or more. The content of chromium contained in the nickel alloy may be 30% by weight or less, 25% by weight or less, or 20% by weight or less.

The modified layer 12 covers the metal base material 11. The modified layer 12 covers a surface of the metal base material 11, and may be in direct contact with the metal base material 11. An intervening layer (not illustrated) such as a platinum layer may be provided between the metal base material 11 and the modified layer 12, and the modified layer 12 may be in indirect contact with the metal base material 11. The modified layer 12 is disposed between the metal base material 11 and ammonia. The modified layer 12 may cover at least a part of the metal base material 11 so that the metal base material 11 does not come into contact with ammonia.

However, if there is a part of the ammonia contact part 10 in which reactivity of the metal base material 11 with ammonia is low, such as when a temperature of ammonia is low or a concentration of ammonia is low, the metal base material 11 need not be covered with the modified layer 12 in that part. That is, the modified layer 12 may cover only parts in which the reactivity of the metal base material 11 with ammonia is high. Therefore, the modified layer 12 may cover only a part of the metal base material 11, or an entire surface of the metal base material 11. The modified layer 12 may be disposed on an uppermost surface of the ammonia contact part 10. In addition, a ceramic layer (not illustrated) or the like may be provided on a surface of the modified layer 12 opposite to the metal base material 11.

The modified layer 12 contains a β-phase NiAl intermetallic compound. The β-phase NiAl intermetallic compound is more effective than the intermetallic compound of iron and aluminum in reducing nitriding by ammonia. The β-phase NiAl intermetallic compound is more effective than the γ-phase (FCC solid solution) and the γ' phase (Ni₃Al) in reducing nitriding by ammonia. The β-phase NiAl intermetallic compound is effective in reducing nitriding by ammonia, and is not easily nitrided even when in contact with ammonia, and therefore nitriding of the metal base material 11 can be reduced by covering the metal base material 11 with the modified layer 12. Note that the modified layer 12 may be a single-layer β-phase NiAl intermetallic compound.

In the modified layer 12, the rate of the number of aluminum atoms to the total number of nickel atoms and aluminum atoms is preferably 25% or more, and 60% or less. When the content of aluminum is within this range, the β-phase NiAl intermetallic compound can be formed in the modified layer 12. In the modified layer 12, the rate of the number of aluminum atoms to the total number of nickel atoms and aluminum atoms may be 30% or more, 35% or more, or 40% or more. In the modified layer 12, the rate of the number of aluminum atoms to the total number of nickel atoms and aluminum atoms may be 55% or less. The content of the β-phase NiAl intermetallic compound in the modified layer 12 may be 50% or more, 60% or more, 70% or more, or 80% or more in atomic rate.

The modified layer 12 may contain elements contained in the metal base material 11 in addition to nickel and aluminum. For example, the modified layer 12 may contain at least one element selected from the group consisting of carbon, silicon, manganese, phosphorus, sulfur, molybdenum, cobalt, copper, tungsten, titanium, niobium, tantalum, vanadium, rhenium, zirconium, boron, and nitrogen in addition to nickel and aluminum. The modified layer 12 may also contain platinum group elements such as platinum in addition to nickel and aluminum.

The thickness of the modified layer 12 is preferably 10 µm or more, and 100 µm or less. When the thickness of the modified layer 12 is 10 µm or more, nitriding can be more reliably reduced. When the thickness of the modified layer 12 is 100 µm or less, the modified layer 12 can be easily formed on the metal base material 11. The thickness of the modified layer 12 may be 15 µm or more, 20 µm or more, or 25 µm or more. Further, the thickness of the modified layer 12 may be 80 µm or less, 60 µm or less, or 40 µm or less.

In a manufacturing method of the ammonia handling device 1, the modified layer 12 can be formed by diffusing aluminum into nickel or a nickel alloy by a diffusion treatment such as a pack method, a vapor phase method, or a slurry method. For example, when the modified layer 12 is formed by a pack method, aluminum concentration and a thickness of the modified layer 12 can be adjusted according to the concentration of aluminum or aluminum alloy powder and the processing time. Moreover, the modified layer 12 can be formed on a surface of the metal base material 11 by methods such as thermal spraying, overlay welding, plating, and powder spraying. When the modified layer 12 is formed by these methods, the metal base material 11 is not particularly limited, and may be a metal other than nickel or a nickel alloy.

After the modified layer 12 is formed on the metal base material 11, heat treatment may be performed. The conditions of heat treatment are not particularly limited as long as a β-phase NiAl intermetallic compound can be formed, and may be, for example, 850°C or higher, and 1100°C or lower. NiAl intermetallic compound can be easily formed by setting the temperature of heat treatment to 850°C or higher. Further, the influence on the metal base material 11 can be reduced by setting the heat treatment temperature to 1100°C or lower. The heat treatment time may be, for example, 0.5 hours or more. The thickness of the modified layer 12 can be increased by setting the heat treatment time to 0.5 hours or more. In the case of diffusion treatment, the thickness of the modified layer 12 tends to increase with increased heat treatment time, but the thickness of the modified layer 12 does not depend so much on the time when the thickness reaches a certain level, even if the heat treatment time is increased. Therefore, an upper limit of the heat treatment time may be 12 hours or less, 8 hours or less, or 6 hours or less, from the viewpoint of manufacturing efficiency.

In this embodiment, the ammonia contact part 10 is described as including the metal base material 11 and the modified layer 12. However, the ammonia contact part 10 need not include the metal base material 11. Even when the ammonia contact part 10 does not include the metal base material 11, nitriding by ammonia can be reduced by the modified layer 12. The ammonia contact part 10 that does not include the metal base material 11 can be manufactured by, for example, melting a NiAl alloy. The ammonia contact part 10 without the metal base material 11 can be obtained by forming the modified layer 12 on the surface of a temporary base material by a method such as powder spraying as described above, and then removing the temporary base material. As described above, the ammonia contact part 10 may be heat-treated after forming the modified layer 12.

The ammonia contact part 10 is configured so that ammonia contacts the modified layer 12. The modified layer 12 can reduce nitriding by ammonia even at a high temperature, so ammonia in contact with the modified layer 12 may be at 200°C or higher. The ammonia in contact with the modified layer 12 may be 300°C or higher, 400°C or higher, or 500°C or higher. The ammonia in contact with the modified layer 12 may be 1000°C or lower, for example.

Next, the ammonia handling device 1 will be described. The ammonia handling device 1 according to this embodiment may be an ammonia combustion gas turbine, an ammonia combustion boiler, an ammonia combustion furnace, an ammonia fuel cell device, an ammonia fueled engine, an ammonia synthesis device, or components included therein. Each ammonia handling device 1 will be described in detail below.

### (Ammonia combustion gas turbine)

First, an example in which the ammonia handling device 1 is an ammonia combustion gas turbine 100 will be described. FIG. 2 is a schematic diagram illustrating the ammonia combustion gas turbine 100 according to one embodiment. As illustrated in FIG. 2, the ammonia combustion gas turbine 100 according to this embodiment includes a compressor 110, a combustion device 120, and a turbine 130.

The compressor 110 takes in and compresses external air, and supplies the compressed air to the combustion device 120. The compressor 110 is mechanically connected to the generator G and the turbine 130 via a rotary shaft 111.

The combustion device 120 uses air sent from the compressor 110 to burn fuel containing ammonia, and generates combustion gas. The combustion device 120 includes a burner 121, a liner 126, a transition piece 127, and a casing 128.

The burner 121 injects ammonia into a combustion chamber 140 to burn ammonia. The burner 121 includes a supply pipe 122, a nozzle 123, an air feeder 124, and a liner head 125. The nozzle 123 is connected to the supply pipe 122, and fuel containing ammonia is supplied to the nozzle 123 from a fuel tank (not illustrated) through the supply pipe 122. The nozzle 123 injects fuel containing ammonia into the combustion chamber 140. The air feeder 124 supplies air sent from the compressor 110 through the air passage 141 into the combustion chamber 140. The liner head 125 is an upstream end wall constituting the combustion chamber 140. The burner 121 burns the fuel injected into the combustion chamber 140 to produce combustion gas.

The combustion chamber 140 is formed of members including the liner 126 and the transition piece 127. The burner 121 is connected to a front end of the liner 126. The transition piece 127 is connected to a rear end of the liner 126 opposite to the burner 121. The transition piece 127 connects the rear end of the liner 126 to an inlet of the turbine 130. The combustion gas generated in the combustion chamber 140 by the burner 121 is supplied to the turbine 130 via the transition piece 127.

The turbine 130 includes a turbine blade (not illustrated), which rotates by passage of combustion gas generated in the combustion device 120. The turbine blade of the turbine 130 is mechanically connected to the compressor 110 through the rotary shaft 111. Therefore, with rotation of the turbine blade, rotation of the compressor 110 is promoted, and the generator G is driven to generate electricity.

High temperature precombustion ammonia or unburned ammonia at 200°C or higher passes through the supply pipe 122, the nozzle 123, the liner head 125, the liner 126, the transition piece 127 and the turbine 130. When ammonia comes into contact with metal materials constituting components above, nitride may be formed.

Therefore, the ammonia combustion gas turbine 100 includes the ammonia contact part 10. Specifically, the supply pipe 122, the nozzle 123, the liner head 125, the liner 126, the transition piece 127, and the turbine 130 which are components included in the ammonia combustion gas turbine 100 includes an ammonia contact part 10. The ammonia contact part 10 includes the modified layer 12 containing a β-phase NiAl intermetallic compound, and is configured so that ammonia comes into contact with the modified layer 12. Therefore, the ammonia contact part 10 can reduce nitriding by ammonia.

### (Ammonia combustion boiler)

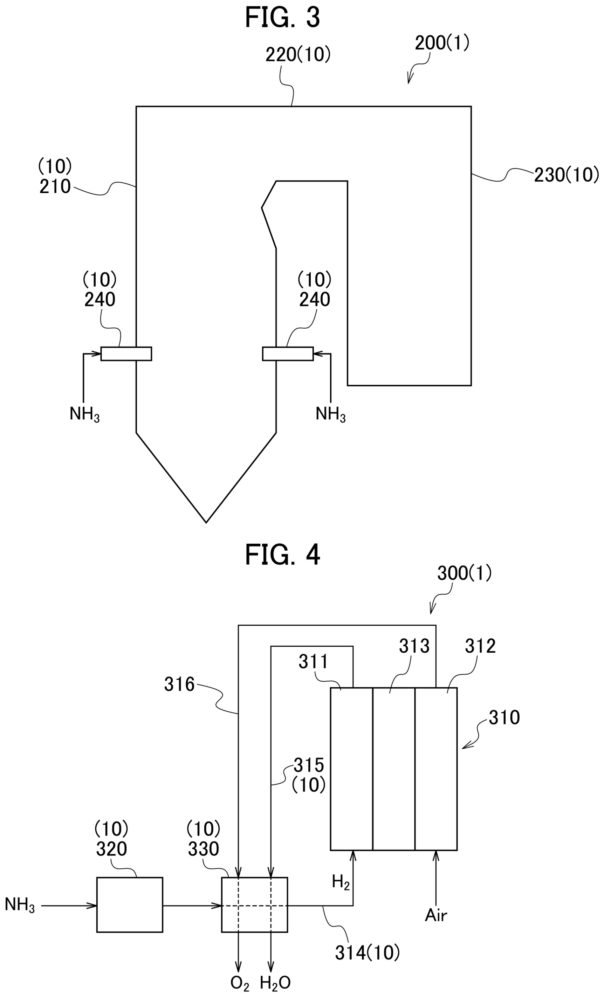

Next, an ammonia combustion boiler 200 according to this embodiment will be described with reference to FIG. 3. As illustrated in FIG. 3, the ammonia combustion boiler 200 according to this embodiment includes a furnace 210, a combustion gas horizontal movement part 220, a combustion gas lowering part 230, and a burner 240.

The furnace 210 extends vertically, and the combustion gas horizontal movement part 220 is connected to an upper part of the furnace 210, which is a downstream side of the furnace 210. The combustion gas horizontal movement part 220 extends horizontally from the upper part of the furnace 210. The combustion gas lowering part 230 is a downstream side of the combustion gas horizontal movement part 220, and is connected to an end of the combustion gas horizontal movement part 220 opposite to the furnace 210. The combustion gas lowering part 230 extends downward from the end of the combustion gas horizontal movement part 220, and discharges the combustion gas produced in the furnace 210 to the outside.

A plurality of burners 240 are provided on the lower wall of the furnace 210. The burners 240 include nozzles, and inject fuel containing ammonia into the furnace 210. Fuel injected from the burner 240 is burned in the furnace 210, and high-temperature combustion gas is generated. The fuel may contain carbon-containing fuel such as pulverized coal in addition to ammonia.

In this case, high temperature precombustion ammonia or unburned ammonia at 200°C or higher passes through the furnace 210, the combustion gas horizontal movement part 220, the combustion gas lowering part 230, and the burner 240. When ammonia comes into contact with metal materials constituting components above, nitride may be formed.

Therefore, the ammonia combustion boiler 200 has the ammonia contact part 10. Specifically, the furnace 210, the combustion gas horizontal movement part 220, the combustion gas lowering part 230, and the burner 240, which are components included in the ammonia combustion boiler 200, have the ammonia contact part 10. The ammonia contact part 10 includes the modified layer 12 containing a β-phase NiAl intermetallic compound, and is configured so that ammonia comes into contact with the modified layer 12. Therefore, the ammonia contact part 10 can reduce nitriding by ammonia.

### (Ammonia combustion furnace)

As with the ammonia combustion boiler 200, an ammonia combustion furnace such as an industrial furnace also includes a burner. High temperature precombustion ammonia or unburned ammonia at 200°C or higher passes through the furnace and the burner. When ammonia comes into contact with metal materials constituting the components above, nitride may be formed.

Therefore, the ammonia combustion furnace includes the ammonia contact part 10. Specifically, the furnace and the burner, which are components included in the ammonia combustion furnace, include the ammonia contact part 10. The ammonia contact part 10 includes the modified layer 12 containing a β-phase NiAl intermetallic compound, and is configured so that ammonia comes into contact with the modified layer 12. Therefore, the ammonia contact part 10 can reduce nitriding by ammonia.

### (Ammonia fuel cell device)

Next, an ammonia fuel cell device 300 according to this embodiment will be described with reference to FIG. 4. As illustrated in FIG. 4, the ammonia fuel cell device 300 includes a fuel cell body 310, an ammonia decomposer 320, and a heat exchanger 330.

The fuel cell body 310 includes a fuel electrode 311, an air electrode 312, and an electrolyte 313. The fuel cell body 310 according to this embodiment is an SOFC. In the fuel electrode 311, hydrogen is oxidized to generate an anode off-gas containing water (steam). In the electrolyte 313, oxygen ions (O²⁻) move from the air electrode 312 to the fuel electrode 311. In the air electrode 312, oxygen ions are reduced to generate a cathode off-gas containing oxygen.

A fuel supply pipe 314 is connected to an inlet of the fuel electrode 311, and hydrogen is supplied to the fuel electrode 311. The fuel supply pipe 314 is provided with the ammonia decomposer 320 and the heat exchanger 330. Ammonia is supplied from a tank (not illustrated) containing ammonia to the ammonia decomposer 320 and the heat exchanger 330, and is decomposed to produce hydrogen. An anode exhaust pipe 315 is connected to the outlet of the fuel electrode 311, and the anode off-gas produced by the fuel electrode 311 is exhausted from inside the fuel cell body 310. The anode exhaust pipe 315 is provided with the heat exchanger 330. A cathode exhaust pipe 316 is connected to the outlet of the air electrode 312, and the cathode off-gas produced by the air electrode 312 is exhausted from inside the fuel cell body 310. The cathode exhaust pipe 316 is provided with the heat exchanger 330.

The ammonia decomposer 320 decomposes ammonia to produce hydrogen. The ammonia decomposer 320 contains an ammonia decomposition catalyst such as a ruthenium catalyst or a nickel catalyst in a container, and decomposes ammonia into hydrogen and nitrogen by contacting ammonia with the catalyst at a temperature of 400°C or higher, and 800°C or lower, for example.

The heat exchanger 330 is connected to the fuel supply pipe 314, the anode exhaust pipe 315, and the cathode exhaust pipe 316. The heat exchanger 330 exchanges the heat of the anode off-gas discharged from the fuel electrode 311, and the heat of the cathode off-gas discharged from the air electrode 312, with the heat of the fuel supplied from the ammonia decomposer 320 to the fuel electrode 311 via the fuel supply pipe 314. The fuel contains ammonia that is not decomposed by the ammonia decomposer 320, and the ammonia decomposition catalyst as described above for decomposing ammonia is arranged in a flow path through which the fuel passes in the heat exchanger 330. Therefore, the heat exchanger 330 decomposes the ammonia remaining in the fuel to produce hydrogen.

Here, high temperature precombustion ammonia or unburned ammonia at 200°C or higher passes through the fuel cell body 310, the ammonia decomposer 320, the heat exchanger 330, the fuel supply pipe 314, and the anode exhaust pipe 315. When ammonia comes into contact with the metal materials constituting ammonia, nitride may be formed.

Therefore, the ammonia fuel cell device 300 includes an ammonia contact part 10. Specifically, the fuel cell body 310, the ammonia decomposer 320, the heat exchanger 330, the fuel supply pipe 314, and the anode exhaust pipe 315, which are components included in the ammonia fuel cell device 300, includes the ammonia contact part 10. The ammonia contact part 10 includes the modified layer 12 containing a β-phase NiAl intermetallic compound, and is configured so that ammonia contacts the modified layer 12. Therefore, the ammonia contact part 10 can reduce nitriding by ammonia.

### (Ammonia fueled engine)

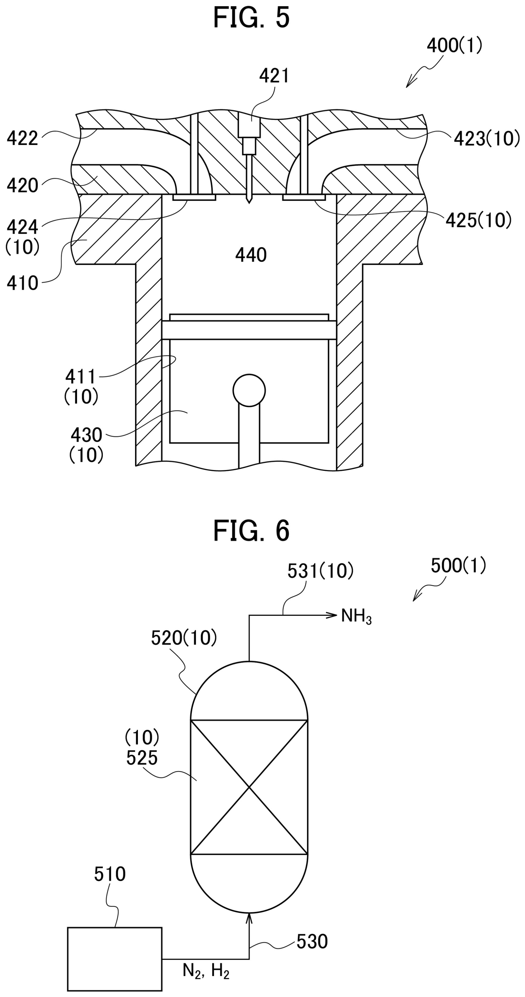

Next, an ammonia fueled engine 400 will be described with reference to FIG. 5. The ammonia fueled engine 400 includes a cylinder block 410, a cylinder head 420, and a piston 430, as illustrated in FIG. 5. The cylinder block 410 includes a cylinder 411. A piston 430 is arranged in the cylinder 411. A combustion chamber 440 is arranged in the cylinder 411 between the cylinder head 420 and the piston 430.

The cylinder head 420 is provided with an injection part 421 for injecting fuel containing ammonia into the combustion chamber 440. The cylinder head 420 includes an intake port 422 and an exhaust port 423 communicating with the combustion chamber 440. The cylinder head 420 is provided with an intake valve 424 capable of opening and closing the intake port 422 of the cylinder head 420 from the combustion chamber 440 side. When the intake valve 424 is opened, air is supplied to the combustion chamber 440 through the intake port 422. The cylinder head 420 is provided with an exhaust valve 425 capable of opening and closing the exhaust port 423 of the cylinder head 420 from the combustion chamber 440 side. When the exhaust valve 425 is opened, the exhaust gas generated by the combustion of fuel in the combustion chamber 440 is discharged to the outside of the ammonia fueled engine 400 through the exhaust port 423.

Then, high temperature precombustion ammonia or unburned ammonia at 200°C or higher passes through the cylinder 411, the exhaust port 423, the intake valve 424, the exhaust valve 425 and the piston 430. When ammonia comes into contact with the metal material constituting the components above, nitride may be formed.

Therefore, the ammonia fueled engine 400 includes an ammonia contact part 10. Specifically, the cylinder 411, the exhaust port 423, the intake valve 424, the exhaust valve 425, and the piston 430, which are components included in the ammonia fueled engine 400, include the ammonia contact part 10. The ammonia contact part 10 includes the modified layer 12 containing a β-phase NiAl intermetallic compound, and is configured so that ammonia contacts the modified layer 12. Therefore, the ammonia contact part 10 can reduce nitriding by ammonia.

### (Ammonia synthesis device)

Next, the ammonia synthesis device 500 will be described with reference to FIG. 6. The ammonia synthesis device 500 includes a raw material supply unit 510 and a reactor 520, as illustrated in FIG. 6.

The raw material supply unit 510 supplies nitrogen and hydrogen, which are raw materials for ammonia, to the reactor 520. In this embodiment, the raw material supply unit 510 supplies a mixed raw material containing ammonia and nitrogen to the reactor 520 through a raw material supply pipe 530. The raw material supply unit 510 may include an ammonia supply unit for supplying ammonia to the reactor 520 and a nitrogen supply unit for supplying nitrogen to the reactor 520.

The reactor 520 generates ammonia from the raw material containing nitrogen and hydrogen supplied from the raw material supply unit 510. The reactor 520 contains an ammonia catalyst structure 525 for producing ammonia from nitrogen and hydrogen. When the raw material containing nitrogen and hydrogen comes into contact with the ammonia catalyst structure 525, the production of ammonia is promoted. The type of the reactor 520 and the reaction conditions in the reactor 520 are not particularly limited. The ammonia produced in the reactor 520 is discharged from the reactor 520 through the discharge pipe 531.

The ammonia catalyst structure 525 includes a catalyst such as an iron-based catalyst, a metal carrier for carrying the catalyst, and a metal casing for receiving the catalyst and the metal carrier.

In this case, high temperature precombustion ammonia or unburned ammonia at 200°C or higher passes through the reactor 520, the ammonia catalyst structure 525, and the discharge pipe 531. When ammonia comes into contact with the metal materials constituting the components above, nitride may be formed.

Therefore, the ammonia synthesis device 500 includes the ammonia contact part 10. Specifically, the reactor 520, which is a component included in the ammonia synthesis device 500, the metal carrier and metal casing included in the ammonia catalyst structure 525, and the discharge pipe 531 include the ammonia contact part 10. The ammonia contact part 10 includes the modified layer 12 containing a β-phase NiAl intermetallic compound, and is configured so that ammonia comes into contact with the modified layer 12. Therefore, the ammonia contact part 10 can reduce nitriding by ammonia.

As described above, the ammonia handling device 1 according to this embodiment includes the modified layer 12 containing a β-phase NiAl intermetallic compound, and includes the ammonia contact part 10 configured so that ammonia contacts the modified layer 12.

The β-phase NiAl intermetallic compound has a high effect of reducing nitriding by ammonia, and is barely nitrided even when in contact with ammonia. Therefore, the ammonia handling device 1 according to this embodiment can reduce nitriding by ammonia.

### Example

This embodiment will be described in more detail with reference to the following examples, but this embodiment is not limited to the following examples.

### (Example)

First, a nickel alloy of ALLOY 600 was prepared. ALLOY 600 is an alloy containing 16% by weight Cr and 8% by weight Fe, with the remainder being Ni and inevitable impurities. A mixed powder containing aluminum alloy powder, alumina as a sintering inhibitor, and ammonium chloride as an activator was prepared.

Next, the nickel alloy was buried in the mixed powder and heated at around 900°C for about 1.5 hours. Then, diffusion treatment was performed to diffuse aluminum onto the surface of the nickel alloy by a pack cementation method, and the sample in this example was obtained.

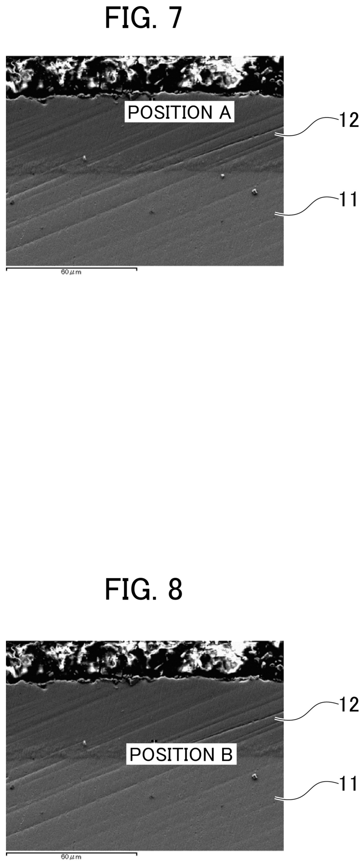

The cross section of the sample in this example was observed by SEM, and elemental analysis was performed by an EDS. Fig. 7 is an SEM image showing that an EDS measurement point is position A near the outer surface of the modified layer. Fig. 8 is an SEM image showing that an EDS measurement point is position B near the metal base material of the modified layer. Table 1 illustrates the results of EDS measurement at position A. Table 2 shows the results of EDS measurement at position B.

**[Table 1]**

| Elements | Weight Concentration [%] | Atomic Concentration [%] |
|---|---|---|
| Al K | 27.14 | 44.61 |
| Cr L | 1.75 | 1.49 |
| Fe L | 4.28 | 3.40 |
| Ni L | 66.84 | 50.50 |
| Total | 100 | 100 |

**[Table 2]**

| Elements | Weight Concentration [%] | Atomic Concentration [%] |
|---|---|---|
| Al K | 24.32 | 41.02 |
| Cr L | 0.99 | 0.86 |
| Fe L | 5.94 | 4.84 |
| Ni L | 68.75 | 53.28 |
| Total | 100 | 100 |

From FIGS. 7 and 8, it was confirmed that a modified layer with a thickness of about 30 µm was formed on the surface of the metal base material by a diffusion treatment. It was found from Table 1 that the rate of the number of aluminum atoms to the total number of nickel atoms and aluminum atom at position A was about 47%. It was found from Table 2 that the rate of the number of aluminum atoms to the total number of nickel atoms and aluminum atoms at position B was about 43%. The rate of the number of aluminum atoms to the total number of nickel atoms and aluminum atoms at position A was larger than that at position B. The atomic ratio of aluminum to nickel in the modified layer was about 1:1, indicating that the modified layer contained β-phase NiAl intermetallic compound. In addition, from FIGS. 7 and 8, two separate layers of the metal base material and modified layer can be confirmed. The modified layer is homogeneous, so it can be seen that the modified layer is β phase single phase, and iron and chromium are dissolved in a solid state in NiAl.

### (Comparative Example 1)

A sample was obtained in the same manner as in the Example described above except that instead of a nickel alloy of ALLOY 600, stainless steel of SUS310S containing 25 % by weight Cr and 20 % by weight Ni were used, with the remainder being Fe and inevitable impurities.

### (Comparative Example 2)

ALLOY 600 used in Example was used as the sample in Comparative Example 2 without diffusion treatment.

### (Comparative Example 3)

ALLOY 738LC was used as the sample in Comparative Example 3 without diffusion treatment. ALLOY 738LC contains 8.5% by weight cobalt, 16.0% by weight chromium, 1.8% by weight molybdenum, 2.6% by weight tungsten, 1.8% by weight tantalum, 3.4% by weight aluminum, 3.4% by weight titanium, 0.9% by weight niobium, 0.10% by weight carbon, 0.010% by weight boron, and 0.060% by weight zirconium, with the remainder being nickel and unavoidable impurities. ALLOY 738LC is a nickel alloy in which the rate of the number of aluminum atoms to the total number of nickel atoms and aluminum atoms is about 11%, and is known to contain γ phase and γ' phases. β phase does not appear at such an aluminum rate, unlike the sample in the Example described above.

### [Evaluation]

### (Ammonia Exposure Test)

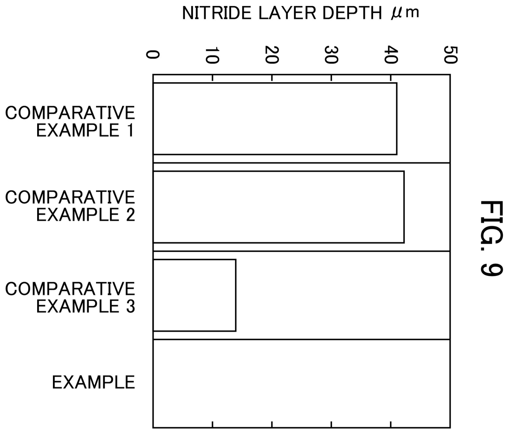

The samples obtained as above was exposed to saturated ammonia at 500°C for 100 hours. The samples after the ammonia exposure test were cut, and a nitrided layer depth on the cut surfaces was observed with an optical microscope. The results are illustrated in Fig. 9.

As illustrated in Fig. 9, the sample of Comparative Example 1 is slightly less nitrided than the sample of Comparative Example 2, or nitrided to a similar degree as Comparative Example 2. The sample of Comparative Example 3 is less nitrided than the samples of Comparative Examples 1 and 2, but the sample of the Example is even less nitrided, with the nitrided layer depth falling below a detection limit. The results show that the intermetallic compound of Ni and Al can reduce nitriding by ammonia compared with the intermetallic compound of Fe and Al. The intermetallic compound of β-phase NiAl intermetallic compound can further reduce nitriding by ammonia compared with the γ phase and γ' phase. From the results, it is considered that nitriding by ammonia was reduced by formation of a dense layer of aluminum nitride in the β phase, even when exposed to high-temperature ammonia environment.

The entire contents of Japanese Patent Application No. 2023-073374 (Application Date: April 27, 2023) are incorporated herein.

Several embodiments have been described, but the embodiments may be modified or varied based on the disclosure above. All components of the embodiments above and all features described in the claims may be individually extracted and combined as long as they do not contradict each other.

### REFERENCE SIGNS LIST

1 Ammonia handling device
10 Ammonia contact part
11 Metal base material
12 Modified layer

## Claims

1. An ammonia handling device comprising:
a modified layer containing a β-phase NiAl intermetallic compound; and
an ammonia contact part configured so that ammonia contacts the modified layer.

2. The ammonia handling device according to claim 1, wherein
the ammonia contact part comprises a metal base material; and
the modified layer covers the metal base material.

3. The ammonia handling device according to claim 2, wherein the metal base material is nickel or a nickel alloy.

4. The ammonia handling device according to any one of claims 1 to 3, wherein the ammonia in contact with the modified layer is at 200°C or higher.

5. The ammonia handling device according to any one of claims 1 to 4, wherein the ammonia handling device is an ammonia combustion gas turbine, an ammonia combustion boiler, an ammonia combustion furnace, an ammonia fuel cell device, an ammonia fueled engine, an ammonia synthesis device, or a component included therein.

6. A method of manufacturing an ammonia handling device according to any one of claims 1 to 5, comprising forming the modified layer by diffusing aluminum into nickel or a nickel alloy.
